# EUROPEAN PATENT SPECIFICATION

(11) **EP 1 264 491 B1**
(45) Date of publication and mention of the grant of the patent: **09.05.2007**
(21) Application number: 01906495.5
(22) Date of filing: 20.02.2001
(51) Int. Cl.: H04Q 7/20, H04B 7/185

(54) **DEVICE AND METHOD FOR POSITION FINDING AND DEBITING OF RECEIVERS**
GERÄT UND VERFAHREN ZUR POSITIONSBESTIMMUNG UND FAKTURIEREN VON EMPFÄNGERN
DISPOSITIF ET PROCEDE PERMETTANT DE LOCALISER ET DE FACTURER DES RECEPTEURS

(30) Priority: 23.02.2000 SE 0000579
(43) Date of publication of application: 11.12.2002
(73) Proprietor: Telia AB (publ), 123 86 Farsta (SE)
(72) Inventor: FRANK, Robert, S-116 62 Stockholm (SE)
(74) Representative: Hopfgarten, Nils
(86) International application number: PCT/SE2001/000377
(87) International publication number: WO 2001/063945

(56) References cited:
- WO-A1-99/41922
- WO-A1-99/48233
- GB-A- 2 295 476
- US-A- 5 913 170

## Description

### TECHNICAL FIELD

The present invention relates to position finding by differential GPS and debiting of a receiver according to the preambles of claims 1 and 6 respectively. The position finding systems utilize radio transmitters, the positions of which are known, for finding the current positions of receivers. For that purpose, primarily satellites are utilized, located in orbit round the globe, and the positions of which are known.

### TECHNICAL PROBLEM

At differential GPS, a correction signal/correction factor must be calculated and transmitted to the receiver from a correction station. The characteristics of the correction signal are defined in international standard RTCM SC-104.

In existing systems, special receivers are required, the positions of which are known, for calculation of correction factors, which are utilized by the receivers for calculation of one for the receiver corrected position. Because the correction factor is determined in a specific receiver, the information shall be transmitted from the receiver which calculates the correction factor to the receiver the position of which shall be found. For mobile telephones are, from authorities, expressed demands that the position shall be possible to indicate with a sufficiently high degree of accuracy. This demand originates from an ever increasing use of mobile telephones in emergencies where turnout of ambulance, fire brigade etc is required. A person alarming has in these situations in many cases no idea of his/her position, or is capable of giving such information. In existing position finding systems which utilize GPS, an accuracy of 100 m can be expected. In emergency cases this accuracy is not sufficient, because it can result in unnecessary delays at turnout to find the place in question. Accuracy as exact as about one meter is desirable.

At the utilization of services at mobile telephony, there will be a need at the telecommunication operators to be able to debit users of mobile telephones for services where the position is important. This can for instance relate to navigation systems while traveling in vehicles of different kinds. It is in this connection of importance that the capacity in existing communication systems is not limited by the position finding system.

### PRIOR ART

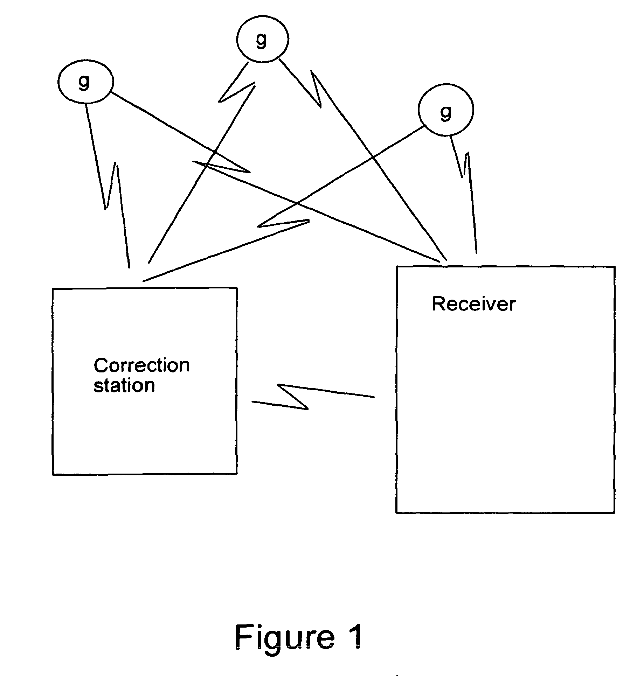

In order to find the position of a receiver, radio transmitters, the positions of which are known, are used. Different methods are at that used, on the one hand ground-based transmitters, on the other satellite stations. Examples of ground-based systems are triangulation, where bearings of at least three different stations are taken from a receiver. Satellite based systems are GPS (Global Positioning System), Figure 1, which is based on exact time and position information. Each satellite in the system transmits continuously information about time information and its position, which is received by the receivers. At finding/determining its position, the receiver listens to time and position information from a number of transmitters. The position is found by identification of the time intervals between the satellites and the receivers. By utilizing the information from at least three satellites it is possible to find the position of a receiver on the surface of the ground or in the air space. The found position is at that indicated as longitude, latitude and altitude. The from the transmitters transmitted signal follows a standard according to Standard Positioning Service, SPS, which is interfered by a signal SA, Selective Availability, at which the accuracy of the calculated position will be about 100 m.

One development of the GPS-system is DGPS (Differential GPS), the aim of which is to overcome the SA-interference. This system utilizes one at the ground level located fixed receiver the exact position of which determined. The at the soil surface located receiver receives the signals from the transmitters and from them calculates correction factors which are forwarded to mobile receivers within a geographically defined area. This technology has made possible that the accuracy of the position finding has improved to about 10 m. The accuracy of the position finding is depending on the distance from the correction station. It accordingly is known that the accuracy is highest in the neighborhood of the correction station, and lower on the fringes of the coverage area of the correction station. To achieve sufficient accuracy, the coverage areas therefore are not allowed to exceed certain sizes. The receivers which shall find their positions shall in these cases have receivers for the signals of the satellites, and other receivers for reception of from the earth station transmitted correction information. Calculation of the position is made in a calculation module, which is arranged in, or is connected to, the receivers. The technology can without difficulties be applied in systems where the need for space and the weight are of secondary importance. In mobile telephones, respective position finding systems utilized by ordinary people, weight and size of the systems utilized are, however, of definite importance. It is here important that systems are created which are easy to use and ergonomically attractive to the users. The existing systems cannot identify or debit the users at utilization of the position finding system. Further, possibilities are lacking to arrange services adapted to the individual user's needs and possibilities.

The transmission of correction signals is, as such, known, at which GSM-data, GSM SMS-CB, the RDS-channel of the FM-band are utilized. The technologies of the existing systems are, however, not considered to fulfill the demands and wishes the users are making. Another argument for improved accuracy is that authorities in different parts of the world make greater demands on that positions of calls from mobile telephones shall be possible to find exactly, which above all is of immediate interest at accidents or other emergency cases. Mentioned conditions have emanated from the fact that positions of emergency calls from mobile telephones are difficult to find exactly, on the one hand due to that the caller does not know his/her position, and on the other due to that the caller is confused or chocked. In these emergency cases it is often of decisive importance that aid is correctly directed from the beginning, without unnecessary time being spent on searching for the person/persons in distress.

Other situations in which persons can land up are to have to take their bearings, or find the route to services which are needed in a situation where immediate danger to person does not exist. It can for instance be a need to find a car repair shop, a restaurant, navigation means, or other functionalities.

In US 5 913 170 a differential satellite or land based positioning system is described which system includes components of a mobile communication network. The system provides accurate and immediate position information to a mobile unit. A reference positioning receiver generates correction data for transmission to the mobile unit. The mobile unit includes a mobile positioning receiver for generating a position fix which is refined using correction data received by the mobile unit.

A GPS electronic pricing system is described in GB 2 295 476. The system comprises a receiver in a vehicle for providing positional data for the vehicle from GPS signals. A controller is provided for receiving the positional data and utilizing them for producing billing information in relation to the duration and location of the vehicle within a chargeable zone. Means utilizing local FM transmitters provide correctional offsets to improve the accuracy of the positional data.

Long wave are mainly used at sea and covers primarily coastal regions. In addition to that existing systems are bulky, the introduction of an extra receiver in mobile units constitutes big disadvantages since the known systems are susceptible to disturbances/interference.

The purpose of the present invention is to provide a position finding device and method of the kind defined in the introductory position with an improved debiting function.

### THE SOLUTION

This purpose is obtained by a device and a method according to claims 1 and 6 respectively.

The present invention relates to a device for position finding and debiting of a first receiver (t). For the purpose a second receiver (m), the position of which is known, is utilized. The second receiver (m) receives signals from transmitter (g) and calculates by means of received information correction factors related to the different transmitters (g). The first receivers (t) are further arranged to receive signals from the transmitters (g) for finding the position of the receiver. Correction of this position is after that made by means of produced correction factors. A separate communication is further established between first and second receivers, at which a correction factor can be connected.

The communication between the first and second receivers are further established via Point to Point Multigroup (PTM-G), and that the first receivers are arranged to be identified, at which one to the receiver defined identity can be supplied with a debiting function.

Finding of the positions of the first receivers can further be calculated in one in the second receiver integrated calculation function, alternatively that the calculation function can be connected to the second receiver. The calculated position is further transmitted to the first receivers which, via presentation devices are presented via the first receivers. The presentation is made visually and/or verbally. By utilizing PTM-G is made possible to obtain identities, as individuals or as groups, for the first receivers.

The invention further relates to a method for correction of position, calculated for receiver (m), and debiting of said receiver. A correction station (t) communicates with the receiver (m) and produces information utilized to correct the for the receiver (m) calculated position. Further, information is produced utilized for debiting of the receiver. Both the correction station (t) and the receiver (m) receive signals transmitted via a general position finding system (g). Calculation of the receiver's (m) position is made on basis of received signals, and correction of the calculated position is made on basis of correction signals produced in the correction station (t). The receivers (m) are further allocated identities, which are identified by the correction system (t) for storing of the debiting information, which are made up and debited/billed users.

The debiting function is introduced in a database which is included into, or can communicate with, the correction station (t). In the position finding system, a number of satellites (g) are included, the positions of which are known, at which the receivers respective the correction stations via transmitted signals are made possible to identify the different, in the system included, satellites. Calculation of the positions of the receivers is made by means of calculation functions included in, or connectable to, the receivers (m), alternatively that these calculation functions are included in, or are connectable to, the correction station (t).

The correction station calculates, on basis of from the satellites received signals, correction factors for respective satellites. In one variant, said correction factors are transmitted to the receivers (m), which include or are connectable to, a calculation function which calculates the for the receivers (m) corrected position. In this case, the correction functions are transmitted from the correction station (t) to the receiver (m).

Transmission between receiver and correction station is made by utilization of Point To Multigroup (PTM-G), which makes possible that individual contact is established between the receivers and the correction station, at which the receivers are identified individually or in groups. The characteristics of the correction signals are further defined by international standard RTCM SC-104.

### ADVANTAGES

The suggested invention makes possible that mobile units can be carried like mobile telephones. This in contrast to in certain cases bulky and heavy equipment which is firmly arranged in vehicles and boats. Further, no separate receivers are needed because the in the invention suggested receivers can be included as a part of, for instance, a mobile telephone or a mobile unit intended for position finding. The invention further makes possible that the users are allocated subscriptions which are adapted to the need of the individual. These adaptations can be accuracy in the position finding, identification of certain in advance specified services, or services which are defined by the user in the present moment.

Possibility is further given to identify the user, via subscription, and charge the user's account for utilized services. In combination there consequently are the possibility to define specific services and the debiting possibility; functionalities which have not previously been possible to offer.

For telecommunication operators, these possibilities of extended supplying of services, possibly in combination with information pertaining to local areas, are a possibility to improve and extend existing service, or to create new services which previously have not been of immediate interest or possible. Another advantage is that the calculation function can be separated from the receiver and be transmitted to, or arranged in connection to, the correction station. This results in that the receivers can be made cheaper and more user-friendly. Changes in the calculation model at this can be introduced centrally for each area and be adapted to the area of current interest.

### DESCRIPTION OF FIGURES

Figure 1 shows the known technology.

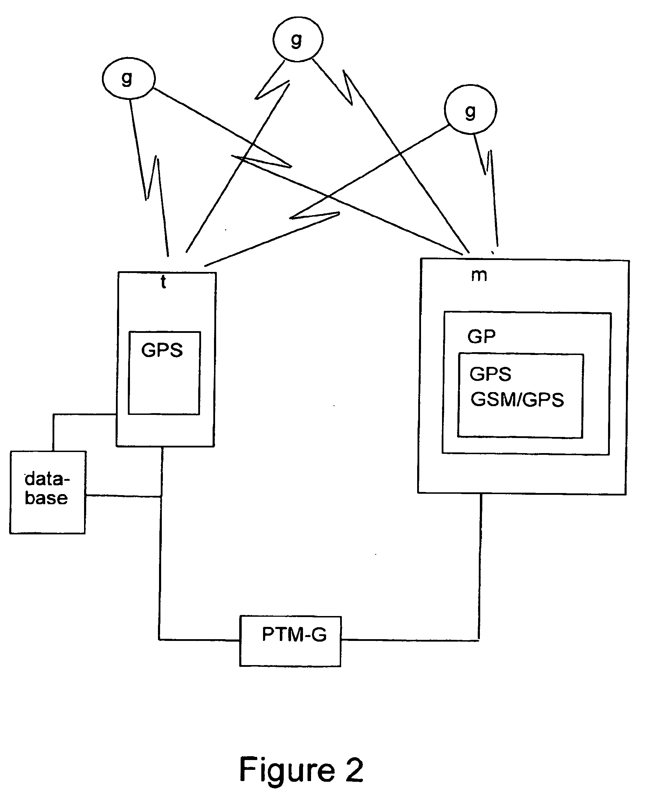

Figure 2 shows a system according to the invention.
Figure 3 shows a flow chart over the invention.
A = Start
B = Transmitted signals
C = The correction station receives signals
D = The receiver receives signals
E = Calculation of correction factor
F = Selfcalculation of preliminary position ?
G = Calculate preliminary position
H = Calculate preliminary position
I = Calculate corrected position
J = Present the position
K = Identify receiver
L = Register user; debit him/her
M = Transmit to database
N = End

### PREFERRED EMBODIMENT

In the following, the invention is described on basis of the figures and the designations in them. The present invention relates to a system and a device for position finding and debiting of a receiver. For the position finding a DGPS-system is utilized, where transmission of the correction signal is made by PTM-G. The identities of the users are found by means of PTM-G, because this is possible via this system. In DGPS, signals from satellites which are received in mobile units and correction stations are utilized. The latter calculate a correction factor which is utilized at the calculation of the position of the receiver. Calculation of the position is allowed to be made either in the correction station or in the receiver.

The present invention includes transmitter, which consists of satellites (g) in orbit, on the ground located correction stations (t), and receivers (m), the position of which shall be found.

The transmitters (g) are part of a satellite based position finding system, for instance GPS. This type of system is since before well known, but has the disadvantage that it primarily is intended for military purposes and that transmitted signals are deliberately interfered with in order to reduce the accuracy in civilian applications. In one development of the GPS-system, ground based fixed stations have been introduced. These stations have a position which is exactly known. The ground-based stations receive the signals from the transmitters and calculate, with knowledge about their positions, correction factors which are utilized to improve one for the receivers calculated finding of position. This technology is since before known as DGPS. The accuracy of GPS is about 100 m, and for DGPS about 10 m. The accuracy for DGPS goes down proportionally in relation to the distance between the correction station and the receiver, which results in that closely located correction stations will increase the accuracy, and more sparsely located correction stations will reduce the accuracy of the system. To reach the accuracy of 10 m, the coverage area of the correction stations is estimated to have a radius of about 200 km.

Point To Multipoint-Group (PTM-G) is a known technology for transmission of information between transmitters and receivers which allows individual information transmission to/from the receivers and transmitters, and that the receivers can be identified individually, alternatively that groups of receivers can be identified collectively. Identification is made by the receivers being allocated identifications which on one hand are transmitted into a database, and on the other that each receiver includes said identification which is transmitted at contact between the receivers (m) and the correction station (t). The identity of the users are allowed to be permanent or possible to be introduced by program to the receivers. Different technologies for this purpose are known since before; for instance is in connection with mobile telephones a so called SIM-card used, which is applied in the mobile telephone to give this a specific identity. The database further includes storing functions for assembling of the utilization of services in connection with the position finding, which are made up for debiting of the user.

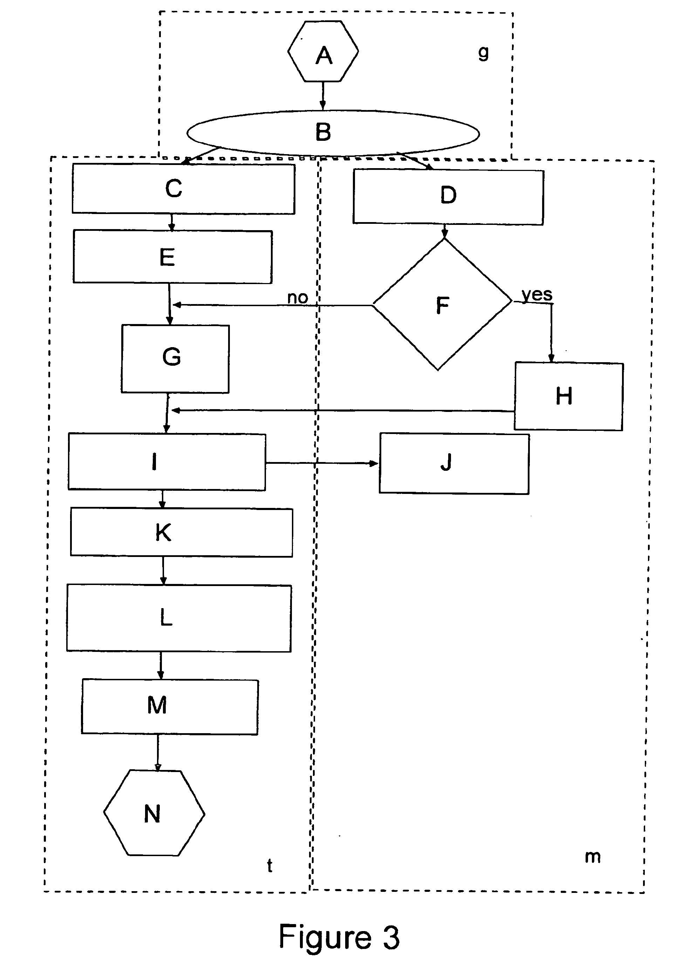

In Figure 3 is shown a flow chart for the position finding. Initially, signals are transmitted from the satellite located transmitters (g) which on one hand are received by the correction stations, t, and on the other are received by the receivers. After that a calculation is made of the correction factors in the correction stations, t. Parallelly, the receivers, m, receive signals from the transmitters, g. After that is checked whether calculation of the position of the receiver shall be made in the receiver or in the correction station. The calculation procedure is the same irrespective of where the calculation is made. The difference is that the receiver, in the case the calculation shall be made in the correction station, transmits signal information to the correction station, which also receives information for identification of the receiver in question. The position of the receiver is after that calculated on basis of the from the signal obtained information, at which a preliminary position finding is acquired. This position finding has normally an accuracy amounting to about 100 m. The correction station utilizes after that the produced correction factors to calculate one for the receivers corrected position indication, the accuracy of which is improved to at least 1/10 of the in the first step indicated accuracy. The calculated position is after that, by utilization of PTM-G, transmitted to the receiver where the position is presented visually or verbally to the user. In this connection an international protocol RTCM SC-104 is utilized. Alternatively can the position finding information, at for instance mobile telephone communication, be transmitted directly to a receiver, for instance an emergency service center, and be utilized for direction of emergency vehicles. The position finding information further can be utilized for activation of services which the mobile telephone user wants to utilize, which are connected to the area in which the user is. These services can be address information, descriptions of traveling routes etc.

Alternatively can the corrected position be calculated in the receiver, m, provided that the receiver is equipped with a calculation module, alternatively that the calculation module can be connected to the receiver. It seems to be most advantageous to calculate the position and corrected position centrally, because this reduces the receiver's need for different components, which raise the price and also influences the weight and size of the receiver. Further it is with a centrally located calculation unit possible to take into consideration specific characteristics in the area the calculations relate to.

Irrespective of which alternative that is selected is, in the correction station, a registration made of the receiver when this is utilized for calculation of its position. The information is stored in a database which on one hand registers the identity of the receiver, and on the other registers which service/services that are utilized. The information after that are stored, in order to later in usual way be debited the user by sending an invoice.

## Claims

1. Device for position finding by means of differential GPS and debiting of a receiver (m), comprising a correction station (t), which is connected for communication wit the receiver (m) and the position of which is known, said correction station being arranged to receive signals from one or more transmitters (g) and calculate correction factors for the received signals, said receiver (m) being arranged to receive signals from the transmitters (g), the position of the receiver (m) being calculated by means of the received signals and corrected by means of correction factors calculated in the correction station (t), said receiver (m) consisting of a portable mobile unit, and the calculation of the position of the receiver (m) being associated to the correction station (t),
**characterized in that** the receiver (m) and the correction station are adapted to establish a separate communication between then (t) via Point To Multipoint-Group (PTM-G),
**in that** the receiver (m) is arranged to be identified at communication between the receiver (m) and the correction station (t), at which a debiting function is arranged to receive the identity and to apply to said identity information regarding the debiting,
**in that** PTM-G is arranged to allocate, to individual users or groups of users, identities which are utilized for the debiting,
and **in that** a database is included in, or is connected for communication with, the correction station (t), at which said database is arranged to store said debiting information.

2. Device as claimed in claim 1, **characterized in that** the correction station or a calculation module connected to the correction station is arranged to calculate the position of the receiver (m).

3. Device as claimed in claim 2,
**characterized in that** the correction station (t) is arranged to transmit the position information to the receiver (m) for presentation via the receiver (m).

4. Device as claimed in claim 3,
**characterized in that** the receiver (m) is arranged to present the position visually or by means of sound.

5. Device as claimed in any of the previous claims, **characterized in that** the transmitters (g) consist of a number of satellites, the positions of which are known, and **in that** both the receiver (m) and the correction station (t) are arranged to identify the satellites.

6. Method for position finding by means of differential GPS and debiting of a receiver (m), wherein a correction station (t), the position of which is known, receives signals from one or more transmitters (g) and calculates correction factors for the received signals, further the receiver m) receives signals from the transmitters (g), the position of the receiver (m) is calculated by means of the received signals and is corrected by means of the correction factors calculated by the correction station (t), and in that the calculation of the position of the receiver (m) is made in connection to the correction station (t),
**characterized in that** a separate communication between the receiver (m) and the correction station (t) is established via Point To Multipoint Group (PTM-G) for connecting a debiting function, **in that**, at the communication between the receiver (m) and the correction station (t), the receiver (m) is identified, **in that** the debiting function receives said identification and applies to said identity the debiting information, **in that** PTM-G allocates to individual users or groups of users identities which are utilized for the debiting, and **in that** said debiting information is stored in a database, which is included in, or is connected for communication with, the correction station (t), the debiting information being put together and invoiced to a user.

7. Method as claimed in claim 6, **characterized in that** the calculation of the position of the receiver (m) is made in the correction station (t) or in a calculation module which is connected to the correction station (t).

8. Method as claimed in claim 7, **characterized in that** the receiver (m) transmits the received signals to the correction station (t), which by means of these signals and calculated correction factors calculates the corrected position of the receiver (m).

9. Method as claimed in claim 8, **characterized in that** the correction station (t) transmits the calculated position to the receiver (m) which presents the position.

10. Method as claimed in claim 9, **characterized in that** the receiver (m) presents the position visually or by means of sound.

## Patentansprüche

1. Vorrichtung für Positionsbestimmung mittels differentiellem GPS und für Belastung eines Empfängers (m), die eine Korrekturstation (t) aufweist, die für Kommunikation mit dem Empfänger (m) verbunden ist und deren Position bekannt ist, weiche Korrekturstation dazu ausgebildet ist, Signale von einem oder mehreren Sendern (g) zu empfangen und Korrekturfaktoren für die empfangenen Signale zu berechnen, welcher Empfänger (m) dazu ausgebildet ist, Signale von Sendern (g) zu empfangen, wobei die Position des Empfängers (m) mittels der empfangenen Signale berechnet und mittels Korrekturfaktoren korrigiert wird, die in der Korrekturstation (t) berechnet werden, weicher Empfänger (m) aus einer tragbaren mobilen Einheit besteht, und wobei die Berechnung der Position des Empfängers (m) mit der Korrekturstation (t) verknüpft wird, **dadurch gekennzeichnet, dass** der Empfänger (m) und die Korrekturstation (t) dazu ausgebildet sind, eine getrennte Kommunikation zwischen sich über die Punkt-zu-Mehrpunkt-Gruppe (PTM-G, Point To Multipoint-Group) einzurichten, dass der Empfänger (m) dazu ausgebildet ist, bei der Kommunikation zwischen dem Empfänger (m) und der Korrekturstation (t) identifiziert zu werden, wobei eine Belastungsfunktion dazu ausgebildet ist, die Identität zu empfangen und auf die Identität Information bezüglich der Belastung anzuwenden, dass die PTM-G dazu ausgebildet ist, individuellen Benutzern oder Gruppen von Benutzern Identitäten zuzuordnen, die für die Belastung verwendet werden, und dass eine Datenbank ist in oder für Verbindung verbunden ist mit der KorrekturStation (t), wobei die Datenbank dazu ausgebildet ist, die Belastungsinformation zu speichern.

2. Vorrichtung nach Anspruch 1, **dadurch gekennzeichnet, dass** die Korrekturstation oder ein Berechnungsmodul, der mit der Korrekturstation verbunden ist, dazu ausgebildet ist, die Position des Empfängers (m) zu berechnen,

3. Vorrichtung nach Anspruch 2, **dadurch gekennzeichnet, dass** die Korrekturstation (t) dazu ausgebildet ist, die Positionsinformation zum Empfänger (m) für DarStellung über den Empfänger (m) zu übertragen.

4. Vorrichtung nach Anspruch 3 , **dadurch gekennzeichnet, dass** der Empfänger (m) dazu ausgebildet ist, die Position visuell oder mit Hilfe von Ton darzustellen.

5. Vorrichtung nach einem der vorangehenden Ansprüche, **dadurch gekennzeichnet, dass** die Sender (g) aus einer Anzahl von Satelliten bestehen, deren Positionen bekannt sind, und dass sowohl der Empfänger (m) als auch die Korrekturstation (t) dazu ausgebildet sind, die Satelliten zu identifizieren.

6. Verfahren für Positionsbestimmung mittels differentiellem GPS und für Belastung eines Empfängers (m), bei dem eine Korrekturstation, (t), deren Position bekannt ist, Signale von einem oder mehreren Sendern (g) empfängt und Korrekturfaktoren für die empfangenen Signale berechnete wobei weiter der Empfänger (m) Signale von den Sendern (g) empfängt, die Position des Empfängers (m) mittels der empfangenen Signale berechnet und mittels der Korrekturfaktoren korrigiert wird, die durch die Korrekturstation (t) berechnet werden, und dass die Berechnung der Position des Empfängers (m) in Verbindung mit der Korrekturstation (t) durchgeführt wird, **dadurch gekennzeichnet, dass** eine getrennte Kommunikation zwischen dem Empfänger (m) und der Korrekturstation (t) über die Punkt-zu-Mehrpunkt-Gruppe (PTM-G, Point to Multipoint Group) zum Verbinden einer Belastungsfunktion eingerichtet wird, dass bei der Kommunikation zwischen dem Empfänger (m) und der Korrekturstation (t) der Empfänger (m) identifiziert wird, dass die Belastungsfunktion die Identifizierung empfängt und die Belastungsinformation auf die Identität anwendet, dass die PTM-G individuellen Benutzern oder Gruppen von Benutzern Identitäten zuordnet, die für die Belastung verwendet werden, und dass die Belastungsinformation in einer Datenbank gespeichert wird, die eingeschlossen ist in oder für Kommunikation verbunden ist mit der Korrekturstation (t), wobei die Belastungsinformation zusammengesetzt wird und einem Benutzer in Rechnung gestellt wird.

7. Verfahren nach Anspruch 6, **dadurch gekennzeichnet, dass** die Berechnung der Position des Empfängers (m) in der Korrekturstation (t) oder einem Berechnungsmodul durchgeführt wird, der mit der Korrekturstation (t) verbunden ist.

8. Verfahren nach Anspruch 7, **dadurch gekennzeichnet, dass** der Empfänger (m) die empfangenen Signale zu der Korrekturstation (t) überträgt, die mittels dieser Signale und berechneter Korrekturfaktoren die korrigierte Position des Empfängers (m) berechnet.

9. Verfahren nach Anspruch 8, **dadurch gekennzeichnet, dass** die Korrekturstation (t) die berechnete Position zu dem Empfänger (m) überträgt, der die Position darstellt.

10. Verfahren nach Anspruch 9, **dadurch gekennzeichnet, dass** der Empfänger (m) die Position visuell oder mit Hilfe von Ton darstellt.

## Revendications

1. Dispositif destiné à trouver une position au moyen d'un GPS différentiel et à débiter un récepteur (m), comprenant une station de correction (t), qui est connectée en vue d'une communication avec le récepteur (m) et dont la position est connue, ladite station de correction étant agencée afin de recevoir des signaux provenant d'un ou de plusieurs émetteurs (g) et de calculer des facteurs de correction pour les signaux reçus, ledit récepteur (m) étant agencé afin de recevoir des signaux en provenance des émetteurs (g), la position du récepteur (m) étant calculée au moyen des signaux reçus et corrigée par des facteurs de correction calculés dans la station de correction (t), ledit récepteur (m) étant constitué d'une unité mobile portable, et le calcul de la position du récepteur (m) étant associé à la station de correction (t),
**caractérisé**
**en ce que** le récepteur (m) et la station de correction (t) sont adaptés pour établir une communication séparée entre eux via un groupe point à multipoint (PTM-G),
**en ce que** le récepteur (m) est agencé pour être identifié lors de la communication entre le récepteur (m) et la station de correction (t), à laquelle une fonction de débit est agencée pour recevoir l'identité et pour appliquer ladite information d'identité concernant le débit,
**en ce que** le PTM-G est agencé pour allouer à des utilisateurs individuels ou à des groupes d'utilisateurs des identités qui sont utilisées pour le débit, et
**en ce qu'**une base de données est comprise dans la station de correction (t), ou est connectée pour une communication avec la station de correction (t) à laquelle ladite base de données est agencée pour stocker des informations de débit.

2. Dispositif selon, la revendication 1, **caractérisé en ce que** la station de correction ou un module calculateur connecté à la station de correction calculent la position du récepteur (m).

3. Dispositif selon la revendication 2, **caractérisé en ce que** la station de correction (t) est agencée pour transmettre les informations de position au récepteur (m) à des fins de présentation par le biais du récepteur (m).

4. Dispositif selon la revendication 3, **caractérisé en ce que** le récepteur (m) est agencé pour présenter la position visuellement ou au moyen de sons.

5. Dispositif selon l'une quelconque des revendications précédentes, **caractérisé en ce que** les émetteurs (g) sont constitués d'un certain nombre de satellites dont les positions sont connues et **en ce que** à la fois le récepteur (m) et la station de correction (t) sont agencés pour identifier les satellites.

6. Procédé destiné à trouver une position au moyen d'un GPS différentiel et à débiter un récepteur (m), dans lequel une station de correction (t), dont la position est connue, reçoit des signaux en provenance d'un ou de plusieurs émetteurs (g) et calcule des facteurs de correction pour les signaux reçus, en outre le récepteur (m) reçoit des signaux en provenance des émetteurs (g), la position du récepteur (m) est calculée au moyen des signaux reçus et est corrigée au moyen des facteurs de correction calculés par la station de correction (t), et le calcul de la position du récepteur (m) est fait en relation avec la station de correction (t), **caractérisé**
**en ce qu'**une communication séparée entre le récepteur (m) et la station de correction (t) est établie par un groupe point à multipoint (PTM-G) afin de connecter une fonction de débit,
**en ce que**, lors de la communication entre le récepteur (m) et la station de correction (t), le récepteur (m) est identifié,
**en ce que** la fonction de débit reçoit ladite identification et applique à ladite identité les informations de débit,
**en ce que** le groupe PTM-G alloue à des utilisateurs individuels ou à des groupes d'utilisateurs des identités qui sont utilisées pour le débit
et **en ce que** lesdits informations de débit sont stockées dans une base de données qui est comprise dans la station de correction (t), ou est connectée à des fins de communication à la station de correction (t), les informations de débit étant rassemblées et facturées à un utilisateur.

7. Procédé selon la revendication 6, **caractérisé en ce que** le calcul de la position du récepteur (m) est fait dans la station de correction (t) ou dans un module de calcul qui est connecté à la station de correction (t).

8. Procédé selon la revendication 7, **caractérisé en ce que** le récepteur (m) transmet les signaux reçus à la station de correction (t) qui calcule la position corrigée du récepteur (m) au moyen de ces signaux et des facteurs de correction calculés.

9. Procédé selon la revendication 8, **caractérisé en ce que** la station de correction (t) transmet la position calculée au récepteur (m) qui présente la position.

10. Procédé selon la revendication 9, **caractérisé en ce que** le récepteur (m) présente la position visuellement ou au moyen d'un son.
